# EUROPEAN PATENT SPECIFICATION

(11) **EP 3 859 628 B1**
(45) Date of publication and mention of the grant of the patent: **09.07.2025**
(21) Application number: 20211072.2
(22) Date of filing: 01.12.2020
(51) Int. Cl.: G06Q 10/08, G01S 5/00

(54) **A METHOD AND APPARATUS FOR TRACKING ITEMS**
VERFAHREN UND VORRICHTUNG ZUR VERFOLGUNG VON GEGENSTÄNDEN
PROCÉDÉ ET APPAREIL DE SUIVI D'ARTICLES

(30) Priority: 29.01.2020 IN 202011003979
(43) Date of publication of application: 04.08.2021
(73) Proprietor: Carrier Corporation, Palm Beach Gardens, FL 33418 (US)
(72) Inventor: SELVAKANI, Kanna, 500081 Telangana (IN); LINGALA, Ramesh, 500081 Telangana (IN)
(74) Representative: Dehns

(56) References cited:
- WO-A1-2018/231351
- GB-A- 2 429 559
- SILICON LABS: "Angle of Arrival - Bluetooth 5.1 Direction Finding Explanation", YOUTUBUE, 28 January 2019 (2019-01-28), pages 17 pp., XP054981718, Retrieved from the Internet <URL:https://www.youtube.com/watch?v=c3XqbEKmNcM> [retrieved on 20210428]
- NEPA P. ET AL: "I-READ 4.0: Internet-of-READers for an efficient asset management in large warehouses with high stock rotation index", 1 September 2019 (2019-09-01), pages 67 - 72, XP055798939, ISBN: 978-1-7281-3815-2, Retrieved from the Internet <URL:https://ieeexplore.ieee.org/stampPDF/getPDF.jsp?tp=&arnumber=8895574&ref=aHR0cHM6Ly9pZWVleHBsb3JlLmllZWUub3JnL2Fic3RyYWN0L2RvY3VtZW50Lzg4OTU1NzQ/Y2FzYV90b2tlbj1CTVJKYlVhQk5KMEFBQUFBOkh5NFdoaU5ERVBXQjVjTm8tQUdQaDNad05SVVYwbVVyQ2FZMk51RzhDM3BnQ3ZadWN5STRkeDlVQkt0aDRBMkptQkthblNJcmJB> DOI: 10.1109/RTSI.2019.8895574

## Description

The present invention generally relates to items. More particularly, the invention relates to an apparatus and a method for tracking movement of one or more items.

One or more items are manufactured in a factory. The items are packed and then transported to various delivery locations by a logistics provider. In order to deliver the one or more items, a delivery person has to keep a list of each items along with their respective delivery locations. During transit and at each delivery location, the delivery person has to manually check the list if a delivery location of any items in the list has arrived. Moreover, at the time of loading and unloading/delivering the one or more items, the delivery person has to manually scan the one or more items using scanners for tracking the delivery location of the one or more items. Also, the one or more items are tracked by using their unique identifiers from the time of loading the items till the items are delivered. Such scanning and tracking of each of the one or more items is a cumbersome process which consumes time by manually scanning the items for tracking. In addition, the delivery person may erroneously deliver the items at an incorrect delivery location resulting in misplacement of items. Also, the delivery person may even forget to deliver an item at its intended delivery location. Current solution requires manual scanning of the items and does not offer any solution to inform the delivery person on delivering the items to the incorrect delivery location or missing the delivery of the item.

In view of the afore-mentioned problems in the existing solutions, there is a need of an effective apparatus and a method for eliminating the requirement of manually scanning of one or more items. There is a requirement to alert a delivery person on delivering an item to an incorrect delivery location. There is also a need to provide a solution to alert a delivery person on missing delivery of the item at its intended delivery location. In order to solve the problems in the existing solutions, an apparatus and a method are disclosed.

Prior existing possibilities in this regard can be found in US2016019497, US2009143923, GB2429559, WO2018231351 or in "I-Read 4.0: Internet-of-READers for an efficient asset management in large warehouses with high stock rotation index, by Nepa P. et al.

Viewed from a first aspect, the invention provides an apparatus (i.e. an accessing unit) for tracking movement of one or more items. The accessing unit comprises a receiver adapted communicate with a server to receive an unloading location of each of one or more items. The accessing unit comprises a location unit adapted to determine a current location of a container using a global positioning system (GPS). The accessing unit also comprises a determination unit adapted to determine an angle of arrival and/or an angle of departure based on a signal from the one or more items and determine an inward movement or an outward movement of the one or more items based on the angle of arrival and/or the angle of departure of each of the one or more items inside the container. The accessing unit further comprises a transmitter adapted to transmit a message to a device based on the current location of the container, the unloading location and the movement of the one or more items, wherein the message comprises: an alert message transmitted to the device when the current location is different from the unloading location and the one or more items is in the outward movement; or a confirmation message transmitted to the device when the current location and the unloading location are same and the one or more items is in the outward movement; or a reminder message transmitted to the device when the current location and the unloading location are same and the one or more items are not moved outside the container.

Optionally, the receiver is adapted to receive the unloading location of one or more items being moved inside the container.

Optionally, the reminder message is regarding non-delivery of the one or more items and to remind a person of the device to deliver the one or more items.

Optionally, the server receives an updated unloading location of the one or more items from a user, wherein the server transmits the updated unloading location of the one or more items to the accessing unit if the unloading location gets changed.

Optionally, the angle of arrival and/or the angle of departure is determined when the accessing unit is accessed by a person using the device.

Optionally, the determination unit is further adapted to determine a time when the one or more items are delivered to a user.

Optionally, the accessing unit is a lock associated with the container.

Viewed from a second aspect, the invention provides a method for tracking movement of one or more items. The method comprises steps of receiving, from a server, an unloading location of each of one or more items and determining, using a global positioning system (GPS), a current location of a container. The method further comprises steps of determining an angle of arrival and/or an angle of departure based on a signal from the one or more items and determining an inward movement or an outward movement of the one or more items based on the angle of arrival and/or the angle of departure of each of the one or more items inside the container. The method further comprises steps of transmitting a message to a device based on the current location of the container, the unloading location and the movement of the one or more items, wherein the message comprises: an alert message transmitted to the device when the current location is different from the unloading location and the one or more items is in the outward movement; or a confirmation message transmitted to the device when the current location and the unloading location are same and the one or more items is in the outward movement; or a reminder message transmitted to the device when the current location and the unloading location are same and the one or more items are not moved outside the container.

In a further aspect, the invention provides a computer readable medium whcih may be for configuring a system for tracking movement of one or more items. The computer readable medium comprises instructions for execution by one or more computer processors in order to configure the one or more processors to carry out the method of the second aspect as well as optionally any optional feature thereof. The computer readable medium may comprise one or more processors and a memory coupled to the one or more processors, where the memory stores the instructions that, in use, are executed by the one or more processors.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Other aspects, advantages, and salient features of the invention will become apparent to those skilled in the art from the following detailed description, which taken in conjunction with the annexed drawings, discloses exemplary embodiments of the invention.
Figure 1A depicts an exemplary system architecture.
Figure 1B depicts an exemplary inward movement and an exemplary outward movement of items.
Figure 2 depicts block diagram of different components of an exemplary accessing unit.
Figure 3 depicts an exemplary flowchart illustrating a method to perform the invention.

Corresponding reference numerals indicate corresponding parts throughout the drawings.

Described herein is the technology with an apparatus and a method for tracking movement of one or more items. One or more items may be loaded in a container for delivery and the container may have an accessing unit (i.e. the apparatus) for monitoring the movement of the one or more items. The accessing unit may receive an unloading location of each of the one or more items and may also determine a current location of the container. When the items are loaded inside the container or when the items are moved outside the container, the accessing unit may be able to track such movement of the one or more items using signal/s from the one or more items. Based on the signal/s from the one or more items, the accessing unit may determine an angle of arrival and/or an angle of departure of the one or more items.

Also, movement (i.e. an outward movement and an inward movement) of the one or more items may be determined by the accessing unit based on the angle of arrival and/or the angle of departure of each of the one or more items. Accordingly, a message may be transmitted to a device based on the current location of the container, the unloading location of the one or more items, and/or the movement of the one or more items.

As used herein, the one or more items may have capability to determine its location and may transmit the location to a server or the accessing unit. Also, the one or more items may include content for consumption or usage by an end customer. Such item may be a bottle or a box having liquid content, solid content or semi solid content or any such item known in the art. The content in the item may be for any kind of consumption/usage and may be an accessory, fabric, clothes, a pharmaceutical content, a liquid content, an eatable content, a lotion, a cream, tablets or any such content known in the art.

As used herein, the container may be a vehicle used for storing and delivering the one or more items. The accessing unit may be positioned or located at the container. The container may be truck, trailer or any such vehicle that is well known in the art.

As used herein, the accessing unit may be a lock associated with the container and can be accessed by an authorized person using the device. Also, the accessing unit may have a capability to determine the location of the container and/or the movement of the one or more items. The accessing unit may have capability to interact with a server using a network.

As used herein, the server has processing capabilities as disclosed further in the specification. The server may be a cloud storage, a remote database, or any such storage known in the art.

As used herein, the network may refer to a wired network, a mesh network, a cellular network (such as Global System for Mobile (GSM) network, a Long-Term Evolution (LTE) network, a code-division multiple access (CDMA) network, a narrow-band internet of thing (NB-IoT) technique or category M1 technique)), a bluetooth network, a WiFi network, a ZigBee network or any such network/technique that is known in the art.

Throughout the specification, reference numeral 106 depicts all items. Each of the reference numerals 106A-106J may be considered as a separate item.

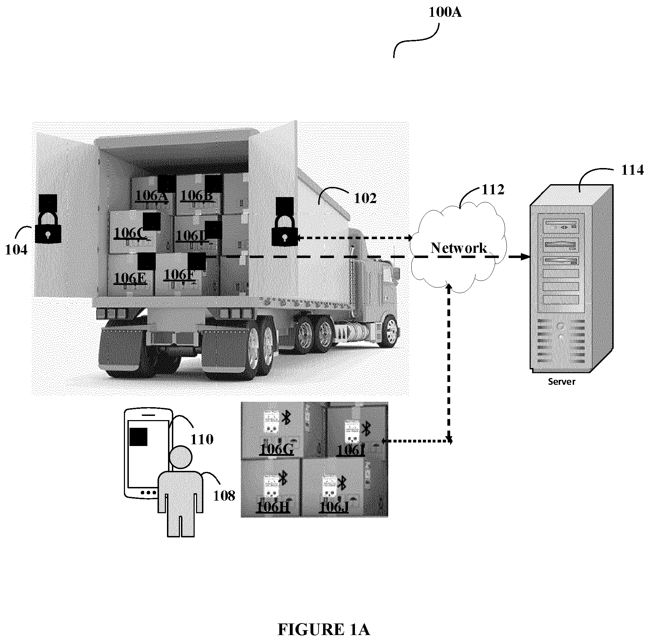

Figure 1A depicts an exemplary system architecture 100A. As depicted in Figure 1A, one or more items 106 may be loaded inside a container 102 or unloaded outside the container 102 for delivery. Also, each of the one or more items 106 may have bluetooth capability. The container 102 may have an accessing unit 104 positioned at a door of the container 102 and the accessing unit 104 also may have bluetooth capability. Moreover, the accessing unit 104 and/or each of the one or more items 106 may communicate with a server 114 using a network 112.

Each of the one or more items 106 may transmit an unloading location to the server 114 through the network 112. The unloading location of an item 106 may correspond to a location where the item 106 is to be delivered. Alternatively, each of the one or more items 106 may communicate the unloading location to the accessing unit 104. Thereby, the accessing unit 104 may receive the unloading location of each of the one or more items 106. In an exemplary embodiment, each of the one or more items 106 may automatically transmit its unloading location to the server 114 or to the accessing unit 104 at the time of loading the one or more items 106 in the container 102. In another exemplary embodiment, the accessing unit 104 may receive the unloading location of each of the one or more items 106 on transmitting a request to the server 114 or to the one or more items 106 for providing its unloading location. Also, the server 114 may receive an updated unloading location of the item 106 from a user who has placed an order of the item 106. The server may transmit the updated unloading location of the item 106 to the accessing unit 104 in an event of change in the unloading location during transit and before delivering the item 106.

Moreover, the accessing unit 104 of the container 102 may be accessed (i.e. opened or closed) by a person 108 (may be a delivery person/driver) using a device 110. In an exemplary embodiment, the accessing unit 104 may be accessed using the device 110 through bluetooth. For this, the person 108 needs to bring the device 110 in the range of (or closer to) the accessing unit 104. In an exemplary embodiment, the accessing unit 104 may accessed using the device 110 through near-field technology. Only the person 108 with valid mobile credentials may access the accessing unit 104 of the container 102. Such valid mobile credentials may be provided to the person 108 by an administrator of the one or more items 106 and/or the container 102. Once the accessing unit 104 is accessed by the person 108, the door of the container 102 may get opened or closed.

When the accessing unit 104 is accessed by the person 108, each of the one or more items 106 may start broadcasting signal/s. In an exemplary embodiment, the signal/s broadcasted by the one or more items 106 are bluetooth signals. The accessing unit 104 may detect the signal/s broadcasted by the one or more items 106. Based on the signal/s received by the accessing unit 104 an angle of arrival and/or an angle of departure of each of the one or more items 106 may be determined (for example, Bluetooth 5.1 technology). Further, the accessing unit 104 may determine movement (i.e. an inward movement and/or an outward movement) of each of the one or more items 106 based on the angle of arrival and/or the angle of departure of each of the one or more items 106.

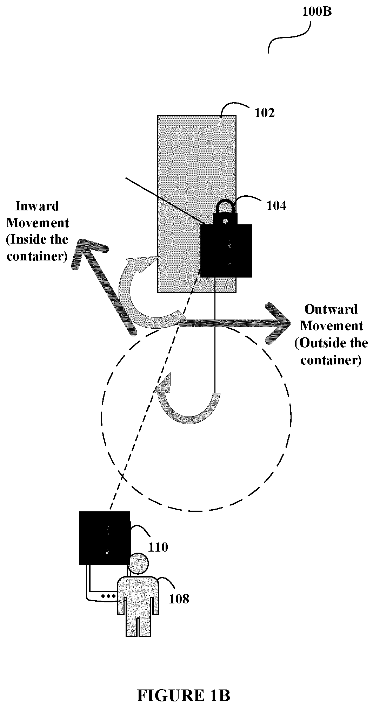

Figure 1A and Figure 1B illustrates the understanding of the inward movement and/or the outward movement of the one or more items 106. The accessing unit 104 at the container 102 is capable to detect the signal/s broadcasted by each of the one or more items 106. Based on the signal/s received by the accessing unit 104, the angle of arrival and/or the angle of departure of each of the one or more items 106 using Bluetooth 5.1 technology may be determined. For an instance, when a signal strength of a signal broadcasted by an item 106A reaches a pre-determined signal threshold, then the accessing unit 104 may determine an angle of arrival for the item 106A. And, when a signal strength of the signal broadcasted by the item 106A falls below a pre-determined signal threshold, then the accessing unit 104 may determine an angle of departure for the item 106A. Moreover, the accessing unit 104 may further determine if the items 106 are moving outward of the container 102 based on the angle of arrival/angle of departure determined by the accessing unit 104. Similarly, the accessing unit 104 may determine if the items 106 are moving inward of the container 102 based on the angle of arrival/angle of departure determined by the accessing unit 104.

As used herein, the inward movement of the one or more items 106 may correspond to the movement when the one or more items 106 being moved inside the container 102 (i.e. arrival of the items) for placing the one or more items 106 inside the container 102. As used herein, the outward movement of the one or more items 106 may correspond to the movement when the one or more items 106 which are already placed inside the container 102 are being moved outside the container 102 (i.e. departure of the items). Referring to Figure 1A, item 106A, item 106B, item 106C, item 106D, item 106E, and item 106F are currently inside the container 102. When the item 106A, item 106B, item 106C, item 106D, item 106E, and item 106F move outside the container 102 from inside of the container 102 for delivery or unloading, then these items will be in the outward movement. Similarly, item 106G, item 106H, item 106I and item 106J are placed outside the container 102. And, when these item 106G, item 106H, item 106I, and item 106J move/loaded inside the container 102 from the outside for placement, then these items will be in the inward movement. Such movement of the items 106 may be determined by the accessing unit 104 based on their broadcasted signal/s. This embodiment of the invention provides technical advantages of eliminating the need to manually scan each items for tracking the items. When the one or more items 106 are moved inside the container 102, the accessing unit 104 may automatically scan the unloading location of the one or more items 106. Further, the accessing unit 104 may receive the unloading location of the one or more items 106 based on the angle of arrival/angle of departure determined by the accessing unit 104. This would enable the accessing unit 104 to automatically receive the unloading location of the one or more items 106.

Moreover, when the accessing unit 104 is accessed by the person 108, the accessing unit 104 may also determine a current location of the container 102. For this, the accessing unit 104 may have a global positioning system (GPS) to determine the current location of the container 102. Alternatively, the container 102 may have capability to determine its current location and may transmit the current location to the accessing unit 104. Based on the current location of the container 102, the unloading location of the one or more items 106, and/or the movement of the one or more items 106, the accessing unit 104 may transmit a message to the device 110 through a network. As used herein, the message may comprise a confirmation message, a reminder message, and/or an alert message. In order to understand different types of messages sent by the accessing unit 104 to the device 110, consider an exemplary Table 1 provided below showing four different scenarios for item 106A with different movements.

**Table 1**

| **Current location of container 102** | **Unloading location of item 106A** | **Movement of the item 106A** | **Type of Message** |
|---|---|---|---|
| **Scenario 1:** Location of container and item are same and item in outward movement | | | |
| 404 1st Ave SW, Quincy, Washington, United States | Quincy Innovation Academy, Quincy, United States | Outward Movement | Confirmation message |
| **Scenario 2:** Location of container and item are same and item in inward movement | | | |
| 404 1st Ave SW, Quincy, Washington, United States | Quincy Innovation Academy, Quincy, United States | Inward Movement | Reminder message |
| **Scenario 3:** Location of container and item are different and item in outward movement | | | |
| 2320 S Broadway, Santa Maria, California 93454, United States | Quincy Innovation Academy, Quincy, United States | Outward Movement | Alert message |
| **Scenario 4:** Location of container and item are different and item in inward movement | | | |
| 2320 S Broadway, Santa Maria, California 93454, United States | Quincy Innovation Academy, Quincy, United States | Inward Movement | No message |

In scenario 1, the current location of container 102 is "404 1st Ave SW, Quincy, Washington, United States" where the Quincy Innovation Academy is situated and the unloading location of item 106A is "Quincy Innovation Academy, Quincy, United States". In this scenario, the current location of container 102 and the unloading location of item 106A are same. The accessing unit 104 determines that the item 106A is in the outward movement (i.e. the item 106A is moving outside the container 102). The accessing unit 104 determines that the item 106A is being delivered to a correct/intended delivery location and may transmit a confirmation message to the device 110. In scenario 2, the current location of container 102 is "404 1st Ave SW, Quincy, Washington, United States" where the Quincy Innovation Academy is situated and the unloading location of item 106A is "Quincy Innovation Academy, Quincy, United States". In this second scenario, the current location of container 102 and the unloading location of item 106A are same. And the accessing unit 104 determines that the item 106A is in the inward movement (i.e. the item 106A is not moving outside the container 102 and is still placed inside the container 102). The accessing unit 104 determines that the item 106A is not being delivered to a correct/intended delivery location and may transmit a reminder message to the device 110. Such a reminder message may be regarding non-delivery of the item 106A and to remind the person 108 of the device 110 to deliver the item 106A. In scenario 3, the current location of container 102 is "2320 S Broadway, Santa Maria, California 93454, United States" and the unloading location of item 106A is "Quincy Innovation Academy, Quincy, United States". In this third scenario, the current location of container 102 and the unloading location of item 106A are different. And the accessing unit 104 determines that the item 106A is in the outward movement and may transmit an alert message to the device 110. The alert message may notify the person 108 of the device 110 that the item 106A is being delivered to an incorrect delivery location as the current location of container 102 and the unloading location of item 106A are different. In scenario 4, the current location of container 102 is "2320 S Broadway, Santa Maria, California 93454, United States" and the unloading location of item 106A is "Quincy Innovation Academy, Quincy, United States". In this fourth scenario, the current location of the container 102 and the unloading location of item 106A are different. And the accessing unit 104 determines that the item 106A is in the inward movement. In such a situation, the accessing unit 104 may not transmit any message to the device 110 as the item 106A is not moving outside the container 102, is still placed inside the container 102 and the current location of container 102 is not an correct/intended delivery location of the item 106A. This embodiment of the invention provides technical advantages of alerting a delivery person on delivering an item to a wrong/incorrect delivery location or alerting a delivery person on forgetting to deliver the item at its intended delivery location.

The present invention also encompasses the accessing unit 104 to determine a time when the one or more items 106 are delivered to an end user and to transmit the determined time, the messages and any other updates of delivery or non-delivery of each of the one or more items 106 to the server 114. The present invention also encompasses the server 114 to receive the message (i.e. confirmation message, reminder message, and/or alert message) and any other updates (such as timings etc.) of delivery or non-delivery of each of the one or more items 106 from the accessing unit 104. This enables the server 114 to determine a time trend of delivery or non-delivery of each of the one or more items 106. The time trend may depicts a timeline of each item 106 from a location of loading the item 106 inside the container 102 till the item 106 reaches the user. This time trend may be analyzed to further improve or control delivery or non-delivery of each of the one or more items 106 which would result in higher consumer satisfaction. Such time trend analysis may also be helpful in effective delivery of the items to the end consumer in shortest time possible and can be helpful for investigation during insurance process.

The present invention also encompasses the accessing unit 104 to determine if the door of the container 102 is opened for a pre-defined period of time (say, more than 2 minutes) during loading or unloading of the one or more items 106. And, if the accessing unit 104 determines that the door of the container 102 is opened for the pre-defined period of time or not closed before the expiry of the pre-defined period of time, the accessing unit 104 may provide a notification/alert to the device 110 of the person 108 so that the person 108 can close the door of the container 102 as soon as an item 106 is placed inside or moved outside the container 102. This would help in maintaining a desired temperature inside the container 102 for keeping the one or more items 106 healthy. Moreover, the heating, ventilation, and air conditioning (HVAC) system of the container 102 may act based on an input from a door sensor which is placed separately inside the container 102 to sense opening and closing of the door of the container 102. And, in case, the door sensor is not working properly or wrongly detecting the opening/closing of the door, then, the HVAC system may communicate with the accessing unit 104 to validate the opening/closing of the door of the container 102 or through telematics devices/cloud services. This feature provides the technical advantage of continuously running the HVAC system of the container 102 even if the door sensor is malfunctioning.

The present invention further encompasses the accessing unit 104 to use a unique identifier associated with each of the one or more items 106 for determining which of the one or more items 106 are moving inward or outward the container 102. Based on the movement of the one or more items 106, the accessing unit 104 may track and report such movement of the one or more items 106 along with the unique identifier associated with the one or more items 106 to the server 114 through the network 112.

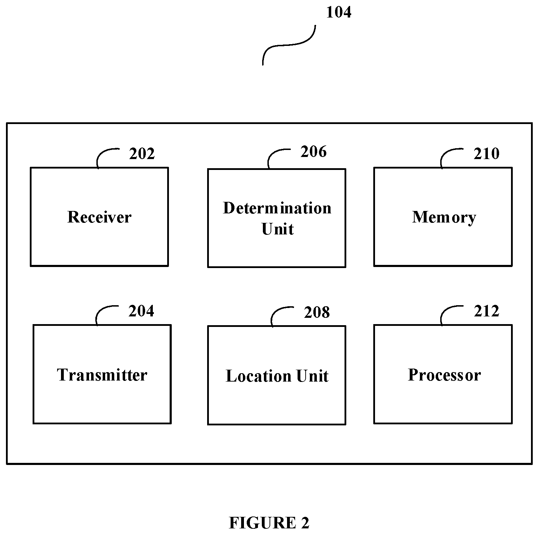

Figure 2 depicts a block diagram of different components of an exemplary accessing unit 104 according to an exemplary embodiment of the invention. The accessing unit 104 may comprise of, but is not limited to, a receiver 202, a transmitter 204, a determination unit 206, a location unit 208, a memory 210 and/or a processor 212. The receiver 202 may be adapted to receive an unloading location of each of one or more items 106 from a server 114 or directly from each of the one or more items 106 as explained above and may communicate the unloading location to the processor 212. The location unit 208 may be adapted to determine a location of a container 102 as explained above and may communicate the location of the container 102 to the processor 212. The determination unit 206 may be adapted to determine an angle of arrival and/or an angle of departure based on a signal from each of the one or more items 106. The determination unit 206 may further be adapted to determine movement (i.e. an inward movement and/or an outward movement) of the one or more items 106 based on the angle of arrival and/or the angle of departure as explained above in details. The determination unit 206 may be adapted to communicate movement of the one or more items 106 to the processor 212. The determination unit 206 may also be adapted to determine a time when the one or more items 106 are delivered to a consumer. The processor 212 may be adapted to determine a message to be transmitted to a device 110 based on the current location of the container 102, the unloading location, and/or the movement of the one or more items 106. Also, the processor 212 may be adapted to communicate the message to the transmitter 204. The transmitter 204 may be adapted to transmit the message to the device 110 based on the current location of the container 102, the unloading location, and/or the movement of the one or more items 106.

Moreover, the receiver 202, the transmitter 204, the determination unit 206, the location unit 208, and/or the memory 210 may be communicably coupled with the processor 212. The different units described herein are exemplary. The invention may be performed using one or more units. For example, the tasks executed by the receiver 202, the transmitter 204, the determination unit 206, the location unit 208, the memory 210 and/or the processor 212 may be performed by a single unit. Alternatively more number of units as described herein may be used to perform the present invention.

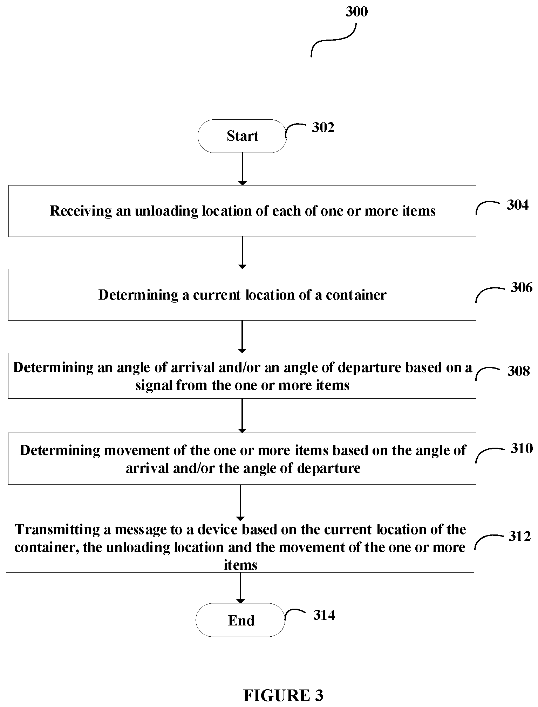

Figure 3 depicts a flowchart outlining the features of the invention in an exemplary embodiment of the invention. The method flowchart 300 describes a method being for tracking movement of one or more items 106. The method flowchart 300 starts at step 302.

At step 304, an accessing unit 104 may receive an unloading location of each of one or more items 106. The unloading location of an item 106 may correspond to a location where the one or more items 106 is to be delivered. In an exemplary embodiment, the accessing unit 104 may receive the unloading location of each of the one or more items 106 from a server 114 or from the each of one or more items 106. This has been explained in greater details in Figure 1A above.

At step 306, the accessing unit 104 may determine a current location of a container 102. For this, the accessing unit 104 may have a global positioning system (GPS) to determine the current location of the container 102. Alternatively, the container 102 may have capability to determine its current location and may transmit its current location to the accessing unit 104.

At step 308, the accessing unit 104 may determine an angle of arrival and/or an angle of departure based on a signal from each of the one or more items 106. This has been explained in greater details in Figure 1A, Figure 1B and Table 1 above.

At step 310, the accessing unit 104 may determine movement (i.e. an inward movement and/or an outward movement) of the one or more items 106 based on the angle of arrival and/or the angle of departure. This has been explained in greater details in Figure 1A, Figure 1B and Table 1 above.

At step 312, the accessing unit 104 may transmit a message to a device 110 based on the current location of the container 102, the unloading location and the movement of the one or more items 106. This has been explained in greater details in Figure 1A, Figure 1B and Table 1 above. Then, the method flowchart 300 may end at 314.

The present invention is applicable in various industries/fields such as, but not limited to, transportation industry and any such industry/field that is well known in the art and where the accessing unit 104 and the container 102 are involved.

The embodiments of the invention discussed herein are exemplary and various modification and alterations to a person skilled in the art are within the scope of the invention, as defined by the claims.

**In** one embodiment of the invention, the invention can be operated using the one or more computer readable devices. The one or more computer readable devices can be associated with an accessing unit 104. A computer readable medium comprises one or more processors and a memory coupled to the one or more processors, the memory stores instructions executed by the one or more processors. The one or more processors configured to receive an unloading location of one or more items 106 and determine a current location of a container 102. The one or more processors configured to determine an angle of arrival and/or an angle of departure based on a signal from the one or more items 106 and determine movement of the one or more items 106 based on the angle of arrival and/or the angle of departure. The one or more processors further configured to transmit a message to a device 110 based on the current location of the container 102, the unloading location and the movement of the one or more items 106.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples of the invention are capable of implementation with numerous other general purpose or special purpose computing system environments, configurations, or devices.

Examples of the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures/Tables and described herein. Other examples of the invention may include different computer-executable instructions or components having more or less functionality than illustrated and described herein. Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units.

In the subject specification, terms such as "data store," "data storage," "database," "cache," and substantially any other information storage component relevant to operation and functionality of a component, refer to "memory components," or entities embodied in a "memory" or components comprising the memory. It will be appreciated that the memory components, or computer-readable storage media, described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C".

Having described aspects of the invention in detail, it will be apparent that modifications and variations are possible without departing from the scope of the invention as defined in the appended claims. As various changes could be made in the above constructions, products, and methods without departing from the scope of the claims, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

## Claims

1. An accessing unit (104) comprising:
- a receiver (202) adapted communicate with a server (114) to receive an unloading location of each of one or more items (106);
- a location unit (208) adapted to determine a current location of a container (102) using a global positioning system (GPS);
- a determination unit (206) adapted to:
determine an angle of arrival and/or an angle of departure based on a signal from the one or more items (106); and
determine an inward movement or an outward movement of the one or
more items based on the angle of arrival and/or the angle of departure of each of the one or more items inside the container (102); and
- a transmitter (204) adapted to transmit a message to a device (110) based on the current location of the container (102), the unloading location and the movement of the one or more items (106);
wherein the message comprises:
an alert message transmitted to the device (110) when the current location is different from the unloading location and the one or more items (106) is in the outward movement; or
a confirmation message transmitted to the device (110) when the current location and the unloading location are same and the one or more items (106) is in the outward movement; or
a reminder message transmitted to the device (110) when the current location and the unloading location are same and the one or more items (106) are not moved outside the container (102).

2. The accessing unit of claim 1, wherein the receiver (202) is adapted to receive the unloading location of one or more items (106) being moved inside the container (102).

3. The accessing unit of any preceding claim, wherein the reminder message is regarding non-delivery of the one or more items (106) and to remind a person (108) of the device (110) to deliver the one or more items.

4. The accessing unit of any preceding claim, wherein the server (114) receives an updated unloading location of the one or more items (106) from a user, wherein the server transmits the updated unloading location of the one or more items to the accessing unit (104) if the unloading location gets changed.

5. The accessing unit of any preceding claim, wherein the angle of arrival and/or the angle of departure is determined when the accessing unit (104) is accessed by a person (108) using the device (110).

6. The accessing unit of any preceding claim, wherein the determination unit (206) is further adapted to determine a time when the one or more items are delivered to a user.

7. The accessing unit of any preceding claim, wherein the accessing unit (104) is a lock associated with the container.

8. A method (300) comprising:
- receiving (304), from a server (114), an unloading location of each of one or more items (106);
- determining (306), using a global positioning system (GPS), a current location of a container (102);
- determining (308) an angle of arrival and/or an angle of departure based on a signal from the one or more items;
- determining (310) an inward movement or an outward movement of the one or more items based on the angle of arrival and/or the angle of departure of each of the one or more items inside the container (102); and
- transmitting (312) a message to a device (110) based on the current location of the container (102), the unloading location and the movement of the one or more items (106);
wherein the message comprises:
an alert message transmitted to the device (110) when the current location is different from the unloading location and the one or more items (106) is in the outward movement; or
a confirmation message transmitted to the device (110) when the current location and the unloading location are same and the one or more items (106) is in the outward movement; or
a reminder message transmitted to the device (110) when the current location and the unloading location are same and the one or more items (106) are not moved outside the container (102).

9. The method of claim 8, further comprising use of the accessing unit (104) as clamed in claim 2.

10. The method of claim 8 or 9, wherein the message is as claimed in claim 3.

11. A computer readable medium comprising instructions for execution by one or more computer processors (212), in order to configure the one or more processors to carry out the method as claimed in claims 8, 9 or 10.

## Patentansprüche

1. Zugriffseinheit (104), umfassend:
einen Empfänger (202), der angepasst ist, um mit einem Server (114) zu kommunizieren, um einen Entladungsstandort jedes eines oder mehrerer Gegenstände (106) zu empfangen;
eine Standorteinheit (208), die angepasst ist, um einen aktuellen Standort eines Behälters (102) unter Verwendung eines globalen Positionierungssystems (global positioning system, GPS) zu bestimmen;
eine Bestimmungseinheit (206), die angepasst ist zum:
Bestimmen eines Ankunftswinkels und/oder eines Abfahrtswinkels basierend auf einem Signal von dem einen oder den mehreren Gegenständen (106); und
Bestimmen einer inneren Bewegung oder einer äußeren Bewegung des einen oder der mehreren Gegenstände basierend auf dem Ankunftswinkel und/oder dem Abfahrtswinkel jedes der einen oder der mehreren Gegenstände innerhalb des Behälters (102); und
einen Sender (204), der angepasst ist, um eine Meldung an eine Vorrichtung (110) zu übertragen, basierend auf dem aktuellen Standort des Behälters (102), dem Entladungsstandort und der Bewegung des einen oder der mehreren Gegenstände (106);
wobei die Meldung Folgendes umfasst:
eine Warnmeldung, die an die Vorrichtung (110) übertragen wird, wenn sich der aktuelle Standort von dem Entladungsstandort unterscheidet und sich der eine oder die mehreren Gegenstände (106) in der äußeren Bewegung befinden; oder
eine Bestätigungsmeldung, die an die Vorrichtung (110) übertragen wird, wenn sich der aktuelle Standort und der Entladungsstandort decken und sich der eine oder die mehreren Gegenstände (106) in der äußeren Bewegung befinden; oder
eine Erinnerungsmeldung, die an die Vorrichtung (110) übertragen wird, wenn sich der aktuelle Standort und der Entladestandort decken und der eine oder die mehreren Gegenstände (106) nicht aus dem Behälter (102) bewegt werden.

2. Zugriffseinheit nach Anspruch 1, wobei der Empfänger (202) angepasst ist, um den Entladungsstandort eines oder mehrerer Gegenstände (106) zu empfangen, die innerhalb des Behälters (102) bewegt werden.

3. Zugriffseinheit nach einem der vorhergehenden Ansprüche, wobei sich die Erinnerungsmeldung auf die Nichtabgabe des einen oder der mehreren Gegenstände (106) bezieht und eine Person (108) der Vorrichtung (110) daran erinnert, den einen oder die mehreren Gegenstände abzugeben.

4. Zugriffseinheit nach einem der vorhergehenden Ansprüche, wobei der Server (114) einen aktualisierten Entladungsstandort des einen oder der mehreren Gegenstände (106) von einem Benutzer empfängt, wobei der Server den aktualisierten Entladungsstandort des einen oder der mehreren Gegenstände an die Zugriffseinheit (104) überträgt, wenn der Entladungsstandort geändert wird.

5. Zugriffseinheit nach einem der vorhergehenden Ansprüche, wobei der Ankunftswinkel und/oder der Abfahrtswinkel bestimmt wird, wenn auf die Zugriffseinheit (104) von einer Person (108) zugegriffen wird, die die Vorrichtung (110) verwendet.

6. Zugriffseinheit nach jedem vorhergehenden Anspruch, wobei die Bestimmungseinheit (206) ferner angepasst ist, um einen Zeitpunkt zu bestimmen, zu dem der eine oder die mehreren Gegenstände an einen Benutzer geliefert werden.

7. Zugriffseinheit nach einem der vorhergehenden Ansprüche, wobei die Zugriffseinheit (104) ein Schloss ist, das dem Behälter zugeordnet ist.

8. Verfahren (300), umfassend:
Empfangen (304) eines Entladungsstandorts jedes eines oder mehrerer Gegenstände (106) von einem Server (114);
Bestimmen (306) eines aktuellen Standorts eines Behälters (102) unter Verwendung eines globalen Positionierungssystems (GPS);
Bestimmen (308) eines Ankunftswinkels und/oder eines Abfahrtswinkels basierend auf einem Signal von dem einen oder den mehreren Gegenständen;
Bestimmen (310) einer inneren Bewegung oder einer äußeren Bewegung des einen oder der mehreren Gegenstände basierend auf dem Ankunftswinkel und/oder dem Abfahrtswinkel jedes der einen oder der mehreren Gegenstände innerhalb des Behälters (102); und
Übertragen (312) einer Meldung an eine Vorrichtung (110) basierend auf dem aktuellen Standort des Behälters (102), dem Entladungsort und der Bewegung des einen oder der mehreren Gegenstände (106);
wobei die Meldung Folgendes umfasst:
eine Warnmeldung, die an die Vorrichtung (110) übertragen wird, wenn sich der aktuelle Standort von dem Entladungsstandort unterscheidet und sich der eine oder die mehreren Gegenstände (106) in der äußeren Bewegung befinden; oder
eine Bestätigungsmeldung, die an die Vorrichtung (110) übertragen wird, wenn sich der aktuelle Standort und der Entladungsstandort decken und sich der eine oder die mehreren Gegenstände (106) in der äußeren Bewegung befinden; oder
eine Erinnerungsmeldung, die an die Vorrichtung (110) übertragen wird, wenn sich der aktuelle Standort und der Entladestandort decken und der eine oder die mehreren Gegenstände (106) nicht aus dem Behälter (102) bewegt werden.

9. Verfahren nach Anspruch 8, ferner umfassend die Verwendung der Zugriffseinheit (104) nach Anspruch 2.

10. Verfahren nach Anspruch 8 oder 9, wobei die Meldung nach Anspruch 3 beansprucht ist.

11. Computerlesbares Medium, umfassend Anweisungen zur Ausführung durch einen oder mehrere Computerprozessoren (212), um den einen oder die mehreren Prozessoren dazu zu konfigurieren, das Verfahren nach den Ansprüchen 8, 9 oder 10 durchzuführen.

## Revendications

1. Unité d'accès (104) comprenant :
- un récepteur (202) conçu pour communiquer avec un serveur (114) pour recevoir un emplacement de déchargement de chacun d'un ou de plusieurs articles (106) ;
- une unité de localisation (208) conçue pour déterminer l'emplacement actuel d'un conteneur (102) à l'aide d'un système de positionnement global (GPS) ;
- une unité de détermination (206) conçue pour :
déterminer un angle d'arrivée et/ou un angle de départ sur la base d'un signal provenant des un ou plusieurs articles (106) ; et
déterminer un mouvement vers l'intérieur ou un mouvement vers l'extérieur des un ou plusieurs articles sur la base de l'angle d'arrivée et/ou de l'angle de départ de chacun des un ou plusieurs articles à l'intérieur du conteneur (102) ; et
- un émetteur (204) conçu pour transmettre un message à un dispositif (110) sur la base de l'emplacement actuel du conteneur (102), de l'emplacement de déchargement et du mouvement des un ou plusieurs articles (106) ;
dans lequel le message comprend :
un message d'alerte transmis au dispositif (110) lorsque l'emplacement actuel est différent de l'emplacement de déchargement et que les un ou plusieurs articles (106) sont en mouvement vers l'extérieur ; ou
un message de confirmation transmis au dispositif (110) lorsque l'emplacement actuel et l'emplacement de déchargement sont identiques et que les un ou plusieurs articles (106) sont en mouvement vers l'extérieur ; ou
un message de rappel transmis au dispositif (110) lorsque l'emplacement actuel et l'emplacement de déchargement sont identiques et que les un ou plusieurs articles (106) ne sont pas déplacés en dehors du conteneur (102).

2. Unité **d'accès** selon la revendication **1,** dans laquelle le récepteur (202) est conçu pour recevoir l'emplacement de déchargement d'un ou de plusieurs articles (106) étant déplacés à l'intérieur du conteneur (102).

3. Unité d'accès selon une quelconque revendication précédente, dans laquelle le message de rappel concerne la non-livraison des un ou plusieurs articles (106) et vise à rappeler à une personne (108) du dispositif (110) de livrer les un ou plusieurs articles.

4. Unité d'accès selon une quelconque revendication précédente, dans laquelle le serveur (114) reçoit un emplacement de déchargement mis à jour des un ou plusieurs articles (106) d'un utilisateur, dans laquelle le serveur transmet l'emplacement de déchargement mis à jour des un ou plusieurs articles à l'unité d'accès (104) si l'emplacement de déchargement est modifié.

5. Unité d'accès selon une quelconque revendication précédente, dans laquelle l'angle d'arrivée et/ou l'angle de départ sont déterminés lorsque l'unité d'accès (104) est accessible par une personne (108) à l'aide du dispositif (110).

6. Unité d'accès selon une quelconque revendication précédente, dans laquelle l'unité de détermination (206) est également conçue pour déterminer un moment où les un ou plusieurs articles sont livrés à un utilisateur.

7. Unité d'accès selon une quelconque revendication précédente, dans laquelle l'unité d'accès (104) est un verrou associé au conteneur.

8. Procédé (300) comprenant :
- la réception (304), à partir d'un serveur (114), d'un emplacement de déchargement de chacun des un ou plusieurs articles (106) ;
- la détermination (306), à l'aide d'un système de positionnement global (GPS), d'un emplacement actuel d'un conteneur (102) ;
- la détermination (308) d'un angle d'arrivée et/ou d'un angle de départ sur la base d'un signal provenant des un ou plusieurs articles ;
- la détermination (310) d'un mouvement vers l'intérieur ou d'un mouvement vers l'extérieur des un ou plusieurs articles sur la base de l'angle d'arrivée et/ou de l'angle de départ de chacun des un ou plusieurs articles à l'intérieur du conteneur (102) ; et
- la transmission (312) d'un message à un dispositif (110) sur la base de l'emplacement actuel du conteneur (102), de l'emplacement de déchargement et du mouvement des un ou plusieurs articles (106) ;
dans lequel le message comprend :
un message d'alerte transmis au dispositif (110) lorsque l'emplacement actuel est différent de l'emplacement de déchargement et que les un ou plusieurs articles (106) sont en mouvement vers l'extérieur ; ou
un message de confirmation transmis au dispositif (110) lorsque l'emplacement actuel et l'emplacement de déchargement sont identiques et que les un ou plusieurs articles (106) sont en mouvement vers l'extérieur ; ou
un message de rappel transmis au dispositif (110) lorsque l'emplacement actuel et l'emplacement de déchargement sont identiques et que les un ou plusieurs articles (106) ne sont pas déplacés en dehors du conteneur (102).

9. Procédé selon la revendication 8, comprenant également l'utilisation de l'unité d'accès (104) telle que revendiquée dans la revendication 2.

10. Procédé selon la revendication 8 ou 9, dans lequel le message est tel que revendiqué dans la revendication 3.

11. Support lisible par ordinateur comprenant des instructions destinées à être exécutées par un ou plusieurs processeurs informatiques (212), afin de configurer les un ou plusieurs processeurs pour mettre en œuvre le procédé tel que revendiqué dans les revendications 8, 9 ou 10.
